# EUROPÄISCHE PATENTSCHRIFT

(11) **EP 0 766 443 B1**
(45) Veröffentlichungstag und Bekanntmachung des Hinweises auf die Patenterteilung: **20.10.2004**
(21) Anmeldenummer: 96113326.1
(22) Anmeldetag: 20.08.1996
(51) Int. Cl.: H04M 3/50

(54) **Verfahren zur Ermittlung von freien Agenten-Kommunikationsendgeräten in Kommunikationsnetzen mit einer automatischen Anrufverteilung**
Method for detecting free agent communication terminals in communication networks with an automatic call distribution
Méthode pour déterminer des terminaux d'opérateur de communication libres dans des réseaux de communication ayant une distribution d'appel automatique

(30) Priorität: 27.09.1995 DE 19535958
(43) Veröffentlichungstag der Anmeldung: 02.04.1997
(73) Patentinhaber: SIEMENS AKTIENGESELLSCHAFT, 80333 München (DE)
(72) Erfinder: Knitl, Reinhard, 81243 München (DE)

(56) Entgegenhaltungen:
- EP-A- 0 376 517
- EP-A- 0 421 583
- EP-A- 0 424 015
- EP-A- 0 559 979
- EP-A- 0 647 051

## Beschreibung

Für eine komfortable Vermittlung von an Kommunikationssystemen eines Kommunikationsnetzes ankommenden Anrufen an vorgegebene Gruppen von Agenten-Kommunikationsendgeräten sind diese mit einer Funktion automatische Anrufverteilung ausgestattet. Die automatische Anrufverteilung - in der Fachwelt auch als ACD bekannt - ist im wesentlichen durch eine an die jeweiligen Kommunikationssysteme angeschlossene Datenverarbeitungsanlage, wie z.B. einen ACD-Server realisiert. Für den Kommunikationsaustausch zwischen dem Kommunikationssystem und dem ACD-Server ist in beiden Einrichtungen eine ACL-Schnittstelle (Applications Connectivity Link) vorgesehen. Als Übertragungsprozedur ist beispielsweise die MSV1-Prozedur oder ein anderes Übertragungsprotokoll verwendbar. Im Kommunikationssystem ist eine Programmstruktur implementiert, mit deren Hilfe sowohl die vermittlungstechnischen Ereignisse insbesondere der ankommenden Anrufe durch Ereignismeldungen an den ACD-Server gemeldet als auch vom ACD-Server über die ACL-Schnittstelle übermittelte vermittlungstechnische Anweisungen zur Ausführung gebracht werden. Bezogen auf eine automatische Anrufverteilung sind dies insbesondere die Umkopplung ankommender Anrufe auf durch die automatische Anrufverteilung ermittelte Agenten-Kommunikationsendgeräte.

Bei einer automatischen Anrufverteilung sind einer oder mehreren Servicenummern eine Gruppe von Agenten-Kommunikationsendgeräten zugeordnet - beispielsweise einer Rufnummer einer Firma sind mehrere Rufannahmeplätze zugeordnet. Hierbei repräsentiert eine Servicenummer einen Service-Kommunikationsanschluß - stellt einen Sammelanschluß mit einem Anrufordner dar -, dem die Agenten-Kommunikationsendgeräte zugeordnet sind, die die gewünschte Gruppe bilden. Ein ankommender Anruf, initialisiert durch Wählen einer Servicenummer in einem internen oder externen Kommunikationsendgerät, wird durch auf den Sammelanschluß vermittelt und dort im Anrufordner gehalten. Gleichzeitig wird durch entsprechende Ereignismeldungen an den ACD-Server das Ankommen eines Rufes für diese Servicenummer gemeldet. Mit Hilfe der im ACD-Server implementierten automatischen Anrufverteilung wird ein freies Agenten-Kommunikationsendgerät der Gruppe ermittelt bzw. bestimmt und der ankommende Anruf an das bestimmte Agenten-Kommunikationsendgerät vermittelt bzw. umgekoppelt. Die Umkopplung wird durch eine vom ACD-Server zum Kommunikationssystem übermittelte, vermittlungstechnische Anweisung veranlaßt. Durch die automatische Anrufverteilung können ankommende Anrufe in einer Warteschlange gehalten, in der Haltezeit Musikeinspielungen oder Ansagen eingeblendet und bei vollständig belegten Agenten-Kommunikationsendgeräten diese an Aufzeichnungs- und Antworteinrichtung weitergeleitet oder abgewiesen werden.

Solche Verfahren werden z.Bsp. in EP-A-0 647 051, EP-A-0 421 583 oder EP-A-0 376 517 offenbart.

Des weiteren können bei zukünftigen Kommunikationsnetzen mit einer automatische Anrufverteilung die Agenten-Kommunikationsendgeräte einer Gruppe über mehrere Kommunikationssysteme verteilt sein, d.h. ankommende Anrufe einer Gruppe sind bei belegten Agenten-Kommunikationsendgeräten eines Kommunikationssystems an weitere Kommunikationssysteme zu vermitteln. Derzeit ist kein Verfahren zur Realisierung von Gruppen von Kommunikationssystem-übergreifenden Agenten-Kommunikationsendgeräten bekannt.

Die der Erfindung zugrundeliegende Aufgabe besteht in der Realisierung eines Kommunikationsnetzes mit automatischer Anrufverteilung, bei dem ankommende Anrufe an ein freies Agenten-Kommunikationsendgerät einer Gruppe von Agenten-Kommunikationsendgeräten, die über mehrere Kommunikationssysteme verteilt sind, vermittelt werden können. Die Aufgabe wird durch die Merkmale des Anspruchs 1 gelöst.

Der wesentliche Aspekt des erfindungsgemäßen Verfahren ist darin zu sehen, daß bei einem ankommenden Anruf mit einer Servicenummer an ein Kommunikationssystem, in dem alle Agenten-Kommunikationsendgeräte der zugeordneten Gruppe belegt sind, im Kommunikationssystem eine Ressourcenanforderung gebildet und gezielt an diejenigen Kommunikationssysteme übermittelt wird, an die Agenten-Kommunikationsendgeräte der jeweiligen Gruppe angeschlossen sind. Die jeweilige Gruppe in einem der weiteren Kommunikationssysteme kann auch eine andere Gruppe mit einer anderen Servicenummer sein, jedoch ist diese andere Gruppe als "Überlauf-Gruppe" in die jeweilige Gruppe einbezogen, wobei bei besetzten Agenten-Kommunikationsendgeräten in einem Kommunikationssystem ein ankommender Anruf an die "Überlauf-Gruppe" des weiteren Kommunikationssystems weitergeleitet werden soll. In den angesprochenen Kommunikationssystemen wird die jeweilige Gruppe hinsichtlich einem freien Agenten-Kommunikationsendgerät überprüft. Anschließend wird eine Antwort gebildet und an das anfragende Kommunikationssystem übermittelt, wobei die Antwort ein freies oder kein freies Agenten-Kommunikationsendgerät anzeigt. Das anfragende Kommunikationssystem wertet die Antworten aus und vermittelt den ankommenden Anruf an ein weiteres, ein freies Agenten-Kommunikationsendgerät anzeigendes Kommunikationssystem weiter, in dem der ankommende Anruf an das freie Agenten-Kommunikationsendgerät vermittelt wird.

Die Ressourcenanfrage und die Antwort werden entweder über das die Kommunikationssysteme verbindende Kommunikationsnetz - Anspruch 2 - oder über ein zusätzliches lokales Kommunikationsnetz - Anspruch 3 - übermittelt. Bei einer Übermittlung über das Kommunikationsnetz (KN) sind in den Kommunikationssystemen zusätzliche Steuerungsroutinen für diesen Informationsaustausch erforderlich, die die Kommunikationssysteme zusätzlich dynamisch belasten. Da bei den Netzbetreibern - auch privaten Netzbetreibern - weitgehend lokale Netze installiert sind, kann die Informationsübermittlung vorteilhaft über diese abgewickelt werden. Da darüber hinaus üblicherweise die automatische Anrufverteilung realisierende Datenverarbeitungseinrichtungen wie beispielsweise Personalcomputer an die Kommunikationssysteme angeschlossen sind, kann der Anschluß an ein lokales Netz vorteilhaft direkt an die Datenverarbeitungsanlage erfolgen und der Informationsaustausch über das lokale Netz durch diese gesteuert werden, wodurch in den Kommunikationssystemen die zusätzliche Steuerung des Informationsaustausches entfällt und diese erheblich entlastet werden.

Vorteilhaft wird bei einer Verfügbarkeit eines der jeweiligen Gruppe zugeordneten Agenten-Kommunikationsendgerätes das ermittelte Agenten-Kommunikationsendgerät reserviert; d.h. es wird für weitere ankommende Rufe nicht mehr vermittelt - Anspruch 4. Bei einer Reservierung wird gemäß einer Weiterbildung des erfindungsgemäßen Verfahrens nach der Ermittlung eines ein freies Agenten-Kommunikationsendgerät meldenden Kommunikationssystems für diejenigen Kommunikationssysteme, die ebenfalls ein freies Agenten-Kommunikationsendgerät der jeweiligen Gruppe melden, mit Hilfe der automatischen Anrufverteilung eine Reservierungs-Freigabe gebildet und an die jeweiligen Kommunikationssysteme übermittelt, worauf in diesen die Reservierung der Agenten-Kommunikationsendgeräte aufgehoben wird - Anspruch 5. Durch diese Reservierungs-Freigabe wird die Reservierung eines freien Agenten-Kommunikationsendgerätes in kürzester Zeit wieder aufgehoben und steht für die Entgegennahme weiterer ankommender Anrufe der jeweiligen Gruppe wieder zur Verfügung. Dies stellt eine maximale Nutzung der Ressource "Agenten-Kommunikationsendgeräte" dar, jedoch ist eine zusätzliche Signalisierung für die Übermittlung der Reservierungs-Freigabe erforderlich.

Alternativ, d.h. ohne Reservierungs-Freigabe, wird gemäß einer weiteren vorteilhaften Ausgestaltung des erfindungsgemäßen Verfahren in den eine Antwort an das anfragende Kommunikationssystem übermittelnden Kommunikationssystemen die Reservierung des Agenten-Kommunikationsendgerätes der jeweiligen Gruppe nach einer vorgegebenen Zeitspanne aufgehoben, sofern in dieser keine Reservierungs-Freigabe für das jeweilige Agenten-Kommunikationsendgerät empfangen wird - Anspruch 6. Das Abwarten der Zeitspanne repräsentiert nicht die effizienteste Nutzung der Ressource "Agenten-Kommunikationsendgeräte", jedoch wird durch den Wegfall der Signalisierung für die Übermittlung der Reservierungs-Freigabe das jeweilige Kommunikationssystem dynamisch entlastet.

Gemäß einer weiteren vorteilhaften Weiterbildung des erfindungsgemäßen Verfahren wird in den eine Ressourcenanfrage empfangenden Kommunikationssystemen nach einer Ermittlung von mehreren freien Agenten-Kommunikationsendgeräten einer Gruppe dasjenige freie Agenten-Kommunikationsendgerät ausgewählt, an das die größte Zeitspanne kein ankommender Anruf vermittelt wurde - Anspruch 12. Hierdurch wird eine möglichst gleiche Auslastung der Agenten-Kommunikationsendgeräte innerhalb eines Kommunikationssystems erreicht.

Nach einer weiteren Ausgestaltung des erfindungsgemäßen Verfahren wird im anfragenden Kommunikationssystem nach dem Empfang mehrerer, jeweils ein freies Agenten-Kommunikationsendgerät der jeweiligen Gruppe anzeigende Antworten das freie Agenten-Kommunikationsendgerät derjenigen Antwort ausgewählt wird, bei der das angegebene Kommunikationssystem gemäß einer vorgegebenen Reihenfolge bevorzugt wird, und/oder bei dem an das angezeigte, freie Agenten-Kommunikationsendgerät am längsten kein ankommender Anruf mehr vermittelt wurde, und/oder bei der bei angegebenen Kommunikationssystem (KS) die meisten Agenten-Kommunikationsendgeräte (AKE) einer Gruppe frei sind und/oder bei der die durchschnittliche Nichtbelegt-Zeitspanne aller in der jeweiligen Gruppe konfigurierten Agenten-Kommunikationsendgeräte am längsten ist - Anspruch 13. Die angegebenen Kriterien zur Auswahl eines freien Agenten-Kommunikationsendgerät sind beliebig kombinierbar, d.h. können auch von Servicenummer zu Servicenummer bzw. von Gruppe zu Gruppe unterschiedlich kombiniert werden.

Weitere vorteilhafte Ausgestaltungen des erfindungsgemäßen Verfahren, insbesondere hinsichtlich der Ausgestaltung der Ressourcenanfrage, der Antwort und der Reservierungs-Freigabe sind den weiteren Ansprüchen zu entnehmen.

Im folgenden wird das erfindungsgemäße Verfahren anhand zweier Blockschaltbilder und eines Ablaufdiagrammes näher erläutert. Dabei zeigen
- FIG 1: in einem Blockschaltbild ein Kommunikationsnetz mit automatischer Anrufverteilung,
- FIG 2: eine Ressourcenanfrage, eine Reservierungs-Freigabe so wie eine Antwort und
- FIG 3: anhand eines Ablaufdiagrammes das erfindungsgemäße Verfahren.

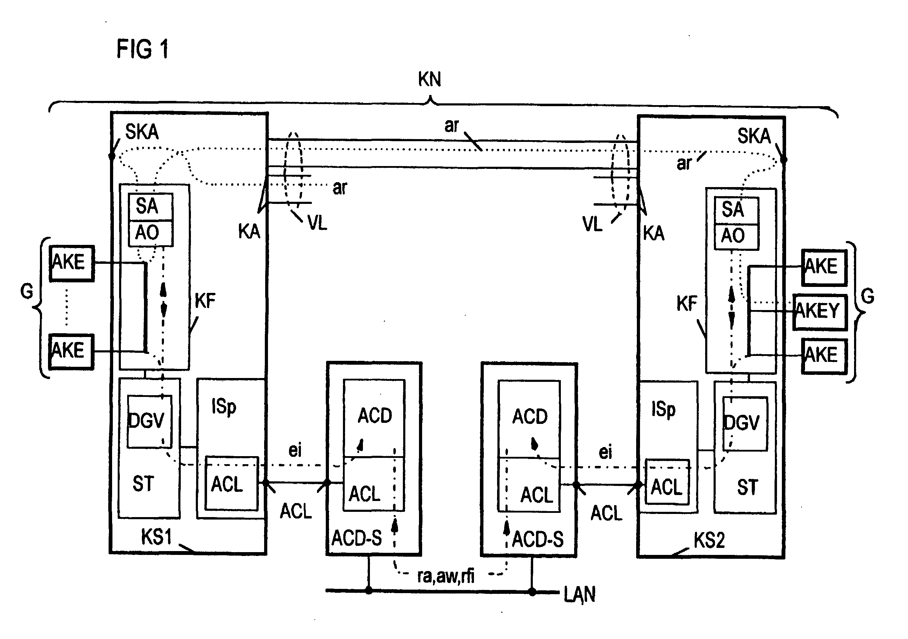

FIG 1 zeigt ein durch beispielhaft zwei Kommunikationssysteme KS1,2 dargestelltes Kommunikationsnetz KN. Die beiden gleichartig realisierten Kommunikationssysteme KS1,2 sind jeweils mit der Funktion "automatische Anrufverteilung" in der Fachwelt als ACD bekannt - ausgestattet. Die Komponenten werden anhand des ersten Kommunikationssystems KS1 erläutert, sind jedoch im zweiten und den weiteren, nicht dargestellten Kommunikationssystemen gleichartig realisiert. Das erste Kommunikationssystem KS1 ist über eine ACL-Schnittstelle ACL mit einem im wesentlichen die automatische Anrufverteilung realisierenden ACD-Server ACD-S verbunden. Die den Kommunikationsaustausch steuernde und überwachende ACL-Schnittstelle ACL ist im ersten Kommunikationssystem KS1 und im ACD-Server ACD-S durch eine Programmstruktur ACL und durch einen nicht dargestellten physikalischen Anschluß - beispielsweise eine V.24-Schnittstelle - gebildet. Im ACD-Server ACD-S ist des weiteren eine die automatische Anrufverteilung realisierende Programmstruktur ACD implementiert. Im ersten Kommunikationssystem KS1 ist die Programmstruktur ACL in einen das erste Kommunikationssystem KS1 administrierende und überwachende, integrierten Betriebstechnik-Server ISp eingebettet. Mit dem Betriebstechnik-Server ISp und mit einem Koppelfeld KF ist eine das erste Kommunikationssystem KS1 steuernde und koordinierende Steuerung ST verbunden.

Neben den nicht dargestellten vermittlungstechnischen Programm enthält die Steuerung ST eine ACD-Steuerprogrammstruktur DGV, in der von ankommenden Anrufen ar die vermittlungstechnischen Verbindungszustände erfaßt, in vermittlungstechnische Ereignismeldungen ei eingefügt und zur Bewertung über die ACL-Schnittstelle ACL an die ACD-Programmstruktur ACD übermittelt werden. Umgekehrt werden in der ACD-Programmstruktur ACD gebildete und über die ACL-Schnittstelle ACL an die ACD-Steuerprogrammstruktur DGV übermittelte, vermittlungstechnische Anweisungen amo ausgeführt, beispielsweise Umkopplungen von Verbindungen. Im Koppelfeld KF ist durch entsprechende betriebstechnische Eingaben ein Sammelanschluß SA mit einem Anrufordner AO konfiguriert, dem eine vorgegebene Gruppe G von Agenten-Kommunikationsendgeräten AKE zugeordnet ist. Wie vorhergehend erläutert, ist im zweiten Kommunikationssystem KS2 ebenfalls ein Sammelanschluß SA mit einem Anrufordner AO konfiguriert, dem eine Gruppe G von Agenten-Kommunikationsendgeräten AKE zugeordnet ist. Beide Gruppen G gehören der gleichen Gruppe G von Agenten-Kommunikationsendgeräten AKE an - beispielsweise sind Agenten-Kommunikationsendgeräte AKE einer einzigen Firma. Die Gruppe G des zweiten Kommunikationssystems KS2 kann auch eine andere Gruppe von Agenten-Kommunikationsendgeräten (AKE) mit einer eigenen Servicenummer repräsentieren - nicht dargestellt-, jedoch ist diese andere Gruppe einschließlich der anderen Servicenummer im ersten Kommunikationssystem KS im Sinne einer "Überlauf-Gruppe" zusätzlich zur jeweiligen Gruppe G angegeben und ist dadurch in die jeweilige Gruppe G als einbezogen anzusehen, d.h. repräsentiert letztlich eine Gruppe G. Dies bedeutet folglich, daß für einen ankommenden Anruf ar mit der Servicenummer sr die Agenten-Kommunikationsendgeräte AKE der jeweiligen Gruppe G zusammen mit denen der anderen Gruppe im zweiten Kommunikationssystem KS eine einzige Gruppe G darstellen.

An das erste Kommunikationssystem KS1 ist an einen Service-Kommunikationsanschluß SKA ein Sammelanschluß SA einschließlich eines Anrufordners AO und sind über weitere Kommunikationsanschlüsse KA Verbindungsleitungen VL angeschlossen, wobei ein Teil der Verbindungsleitungen VL zum zweiten Kommunikationssystem KS2 und ein weiterer Teil der Verbindungsleitungen VL zu den weiteren, nicht dargestellten Kommunikationssystemen des Kommunikationsnetzes KN geführt ist. Das Kommunikationsnetz KN stellt beispielsweise ein privates Kommunikationsnetz dar, wobei der weitere Teil der Verbindungsleitung VL zu Kommunikationssystemen im privaten oder im öffentlichen Kommunikationsnetz - z.B. öffentliches Fernsprechnetz - geführt sind. Die über den weiteren Teil der Verbindungsleitungen VL ankommenden Anrufe ar mit der entsprechenden Rufnummer, d.h. Servicenummer sr, werden an den Sammelanschluß SA umgeleitet. Dem Sammelanschluß ist ein Anrufordner AO zugeordnet, mit dessen Hilfe und mit Hilfe der ACD-Steuerprogrammstruktur DGV der ankommende Anruf ar gehalten und dieser einschließlich der Servicenummer sr durch eine vermittlungstechnische Ereignismeldung ei über die ACL-Schnittstelle ACL der Programmstruktur ACD für die automatische Anrufverteilung gemeldet wird. Dieses bestimmt nach vorgegebenen Kriterien ein freies Agenten-Kommunikationsendgerät AKE und bildet eine vermittlungstechnische Anweisung amo, die über die ACL-Schnittstelle ACL an die ACD-Steuerprogrammstruktur DGV übermittelt wird, mit deren Hilfe der ankommende Anruf ar an das freie Agenten-Kommunikationsendgerät AKE umgekoppelt wird.

Für einen Informationsaustausch, insbesondere für das Übermitteln einer erfindungsgemäßen Ressourcenanfrage ar, einer Antwort aw und einer Reservierungs-Freigabe rfi, sind die ACD-Server ACD-S an ein lokales Netz LAN angeschlossen. Das lokale Netz LAN ist bei örtlich nahen ACD-Servern ACD-S durch ein "Lokal Area Network" und bei örtlich entfernten ACD-Servern ACD-S durch ein "Wide Area Network" realisiert. Prinzipiell sind alle Netztypen wie Busnetz, Ring- und Sternnetze geeignet. Vorzugsweise sind die lokalen Netze LAN vorgesehen, die bei den Betreibern von privaten oder öffentlichen Kommunikationsnetzen bereits verfügbar sind. Die Übermittlung der Ressourcenanfrage ar, der Antwort aw und der Reservierungs-Freigabe rfi erfolgt entsprechend dem in dem jeweiligen lokalen Netz LAN eingesetzten Übertragungsverfahren bzw. Übertragungsprotokoll.

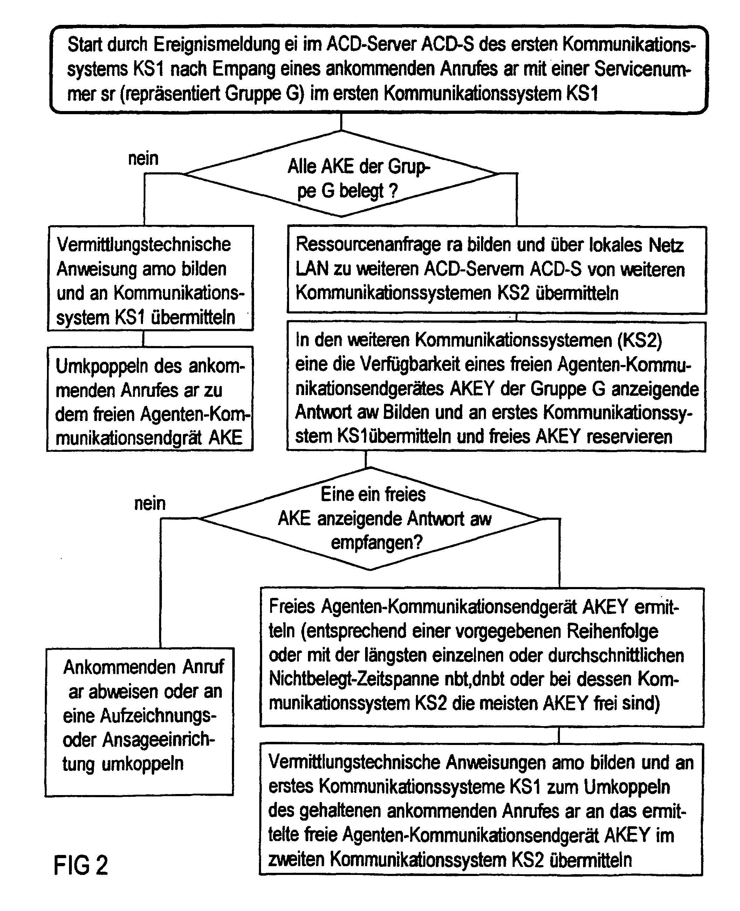

Kann im jeweiligen Kommunikationssystem KS kein freies Agenten-Kommunikationsendgerät AKE mehr für einen ankommenden Anruf gefunden werden und ist die Gruppe G über mehrere Kommunikationssysteme KS1,2 verteilt - im Ausführungsbeispiel zwei -, kommt das erfindungsgemäße Verfahren zum Einsatz. Die einzelnen Verfahrensschritte sind in dem sich selbst erläuternden Ablaufdiagramm in FIG 2 dargestellt.

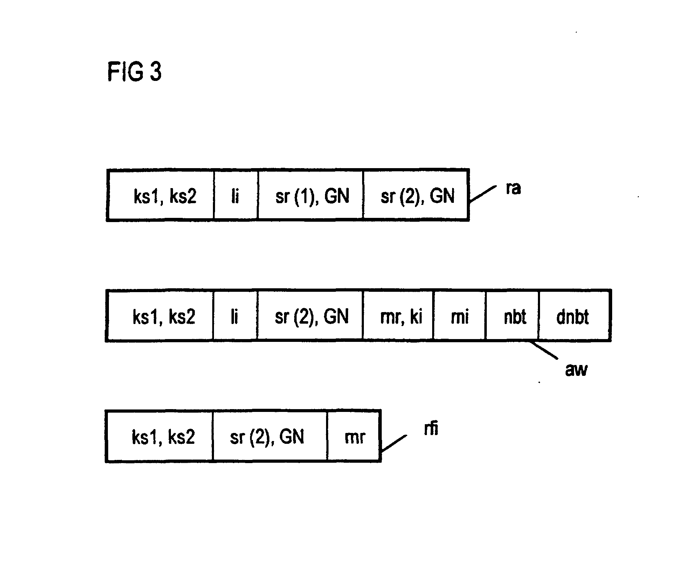

In FIG 3 ist die Struktur einer Ressourcenanfrage ra, einer Reservierungs-Freigabe rfi und einer Antwort aw dargestellt, die alle eine das Ursprungs- und Ziel-Kommunikationssystem KS1,2 repräsentierende Kommunikationssysteminformation ks1,2, umfassen. In die Ressourcenanfrage ar und die Antwort aw ist anschließend eine den physikalischen, den jeweiligen ankommenden Anruf ar übermittelnden Kommunikationsanschluß KA im ersten, d.h. Ursprungs-Kommunikationssystem KS1 repräsentierende Leitungsinformation li eingefügt. Die Ressourcenanfrage ra umfaßt zusätzlich eine im ersten, d.h. Ursprungs-Kommunikationssystem KS1 die zugeordnete Gruppe G von Agenten-Kommunikationsendgeräte AKE repräsentierende Servicenummer sr(1) und eine im zweiten, d.h. Ziel-Kommunikationssystem KS2 die zugeordnete Gruppe G von Agenten-Kommunikationsendgeräte (AKE) repräsentierende Servicenummer sr(2). Durch eine Servicenummer sr ist eine Gruppe von Agenten-Kommunikationsendgeräten AKE eindeutig definiert und durch diese ansprechbar. Wie bereits erläutert, können die der jeweiligen Gruppe G zugehörigen Servicenummern sr(1),(2) im ersten und zweiten Kommunikationssystem KS1,2 gleich aber auch unterschiedlich sein. Zusätzlich können Gruppennamen GN - durch die Bezeichnung GN in der FIG 3 angedeutet - angegeben werden.

In der Antwort aw ist des weiteren eine das freie Agenten-Kommunikationsendgerät AKEY anzeigende Rufnummer rnr oder eine kein freies Agenten-Kommunikationsendgerät AKE anzeigende Kenninformation ki angegeben. Mit Hilfe der das freie Agenten-Kommunikationsendgerät AKEY anzeigende Rufnummer rnr kann ein auf ein weiteres Kommunikationssystem KS2 umgekoppelter ankommender Anruf ar sofort an das freie Agenten-Kommunikationsendgerät AKEY vermittelt werden. Optional enthält die Antwort aw eine die Anzahl noch freier Agenten-Kommunikationsendgeräte AKE der jeweiligen Gruppe G anzeigende Mengeninformation mi, eine Nichtbelegt-Zeitspanne nbt des angegebenen freien Agenten-Kommunikationsendgerätes AKEY und/oder eine die durchschnittliche Nichtbelegt-Zeitspanne dnbt aller in der jeweiligen Gruppe G konfigurierten Agenten-Kommunikationsendgeräte AKE. Durch die optionalen Informationen mi,nbt,dnbt ist eine vorteilhafte Auswertung bei mehreren in einem anfragenden Kommunikationssystem KS1,2 empfangenen Antworten aw und eine gleichmäßigere und effizientere Auslastung der einer Gruppe G zugeordneten Agenten-Kommunikationsendgeräte AKE möglich. Wird bei jeder Antwort aw die Mengeninformation mi angegeben, kann das Kommunikationssystem KS1,2 mit den noch meisten freien Agenten-Kommunikationsendgeräten AKE ausgewählt werden. Sind in die Antworten aw die Nichtbelegt-Zeitspannen nbt eingefügt, kann im anfragenden Kommunikationssystem KS1 das freie Agenten-Kommunikationsendgerät AKE ausgewählt werden, an das am längsten kein ankommender Anruf ar vermittelt wurde.

Die Auswahl eines noch freien Agenten-Kommunikationsendgerätes AKE bei mehreren freien Agenten-Kommunikationsendgeräten AKE kann alternativ auch im angesprochenen Kommunikationssystem KS2 durchgeführt werden. Die Auswahl wird insbesondere hinsichtlich der Nichtbelegt- bzw. Belegtzeiten und der Anzahl der in dem jeweiligen Kommunikationssystem KS1,2 noch freien Agenten-Kommunikationsendgeräte getroffen.

Das erfindungsgemäße Verfahren ist auch für mehrere, nicht dargestellte Gruppen von Agenten-Kommunikationsendgeräten AKE anzuwenden, wobei die Kommunikationssysteme hinsichtlich der Service-Kommunikationsanschlüsse SKA, der Sammelanschlüsse SA einschließlich der Anrufordner AO und der Programmstrukturen DGV entsprechend auszugestalten sind.

## Patentansprüche

1. Verfahren zur Ermittlung von freien Agenten-Kommunikationsendgeräten (AKE) in Kommunikationsnetzen (KN) mit einer automatischen Anrufverteilung (ACD),
- bei dem ankommende, an eine Servicenummer (sr) adressierte Anrufe (ar) jeweils zu einem freien Agenten-Kommunikationsendgerät (AKE) eines Kommunikationssystems (KS1,2), das durch die automatische Anrufverteilung (ACD) aus einer Gruppe (G) von der Servicenummer (sr) zugeordneten Agenten-Kommunikationsendgeräte (AKE) ausgewählt wird, vermittelt werden, wobei die einer Gruppe (G) zugeordneten Agenten-Kommunikationsendgeräte (AKE) über mehrere Kommunikationssysteme (KS1,2) des Kommunikationsnetzes (KN) verteilt sind,
- bei dem bei einem an einem Kommunikationssystem (KS) ankommenden Anruf (ar) mit einer Servicenummer (sr), für den in der zugeordneten Gruppe (G) dieses Kommunikationssystems (KS1) kein Agenten-Kommunikationsendgerät (AKE) mehr frei ist, Ressourcenanfragen (ra) gebildet und an diejenigen Kommunikationssysteme (KS2) übermittelt werden, an die Agenten-Kommunikationsendgeräte (AKE) der jeweiligen Gruppe (G) verteilt sind,
- bei dem in jedem eine Ressourcenanfrage (ra) empfangenden Kommunikationssystem (KS2) die Verfügbarkeit eines der jeweiligen Gruppe (G) zugeordneten Agenten-Kommunikationsendgerätes (AKEY) ermittelt sowie eine Antwort (aw) gebildet und an das anfragende Kommunikationssystem (KS1) übermittelt wird,
- bei dem im anfragenden Kommunikationssystem (KS1) aus der übermittelten Antwort (aw) ein Kommunikationssystem (KS2) mit einem freien Agenten-Kommunikationsendgerät (AKEY) der jeweiligen Gruppe (G) ermittelt und der ankommende Anruf (ar) mit Hilfe der automatischen Anrufverteilung (ACD) im Sinne einer Vermittlung an das freie Agenten-Kommunikationsendgerät (AKEY) an das ermittelte Kommunikationssystem (KS2) weitervermittelt wird.

2. Verfahren nach Anspruch 1, **dadurch gekennzeichnet, daß** die Ressourcenanfrage (ra) und die Antwort (aw) über das Kommunikationsnetz (KN) übermittelt werden.

3. Verfahren nach Anspruch 1, **dadurch gekennzeichnet, daß** die Ressourcenanfrage (ra) und die Antwort (aw) über ein zusätzliches lokales Netz (LAN) übermittelt werden.

4. Verfahren nach einem der Ansprüche 1 bis 3, **dadurch gekennzeichnet, daß** bei einer Verfügbarkeit eines der jeweiligen Gruppe (G) zugeordneten Agenten-Kommunikationsendgerätes (AKEY) das ermittelte Agenten-Kommunikationsendgerät (AKEY) reserviert wird.

5. Verfahren nach Anspruch 3, **dadurch gekennzeichnet, daß** nach der Ermittlung eines ein freies Agenten-Kommunikationsendgerät (AKEY) meldenden Kommunikationssystems (KS2) für diejenigen Kommunikationssysteme (KS), die ebenfalls ein freies Agenten-Kommunikationsendgerät (AKEY) der jeweiligen Gruppe (G) melden, mit Hilfe der automatischen Anrufverteilung (ACD) eine Reservierungs-Freigabe (rfi) gebildet und an die jeweiligen Kommunikationssysteme (KS) übermittelt werden, worauf in diesen die Reservierung der Agenten-Kommunikationsendgeräte (AKE) aufgehoben wird.

6. Verfahren nach Anspruch 4, **dadurch gekennzeichnet, daß** in den eine Antwort (aw) an das anfragende Kommunikationssystem (KS1) übermittelnden Kommunikationssystemen (KS2) die Reservierung des Agenten-Kommunikationsendgerätes (AKE) der jeweiligen Gruppe (G) nach einer vorgegebenen Zeitspanne aufgehoben wird, sofern in dieser keine Reservierungs-Freigabe (rfi) für das jeweilige Agenten-Kommunikationsendgerät (AKE) empfangen wird.

7. Verfahren nach Anspruch 1, **dadurch gekennzeichnet, daß** im anfragenden Kommunikationssystem (KS1) nach einem Empfang von Antworten (aw), die kein freies Agenten-Kommunikationsendgerät (AKE) der jeweiligen Gruppe (G) melden, der ankommende Anruf (ar) mit Hilfe der automatischen Anrufverteilung (ACD) an Rufweiterbehandlungseinrichtung vermittelt oder abgewiesen wird.

8. Verfahren nach einem der vorhergehenden Ansprüche, **dadurch gekennzeichnet,**
**daß** die Ressourcenanfrage (ra)
- eine das Ursprungs- und Ziel-Kommunikationssystem (KS1,2) repräsentierende Kommunikationssysteminformation (KS1,2),
- eine den physikalischen, den jeweiligen ankommenden Anruf (ar) übermittelnden Kommunikationsanschluß (KA) im Ursprungs-Kommunikationssystem (KS1) repräsentierende Leitungsinformation (li),
- eine im Ursprungs-Kommunikationssystem (KS1) die zugeordnete Gruppe (G) von Agenten-Kommunikationsendgeräte (AKE) repräsentierende Servicenummer (sr(1)), und
- eine im Ziel-Kommunikationssystem (KS2) die zugeordnete Gruppe (G) von Agenten-Kommunikationsendgeräte (AKE) repräsentierende Servicenummer (sr(2)) umfaßt.

9. Verfahren nach einem der vorhergehenden Ansprüche, **dadurch gekennzeichnet,**
**daß** die Antwort (aw)
- eine das Ursprungs- und Ziel-Kommunikationssystem (KS1,2) repräsentierende Kommunikationssysteminformation (KS1,2),
- eine den physikalischen, den jeweiligen ankommenden Anruf (ar) übermittelnden Kommunikationsanschluß (KA) im Ursprungs-Kommunikationssystem (KS1) repräsentierende Leitungsinformation (li),
- eine das freie Agenten-Kommunikationsendgerät (AKE) anzeigende Rufnummer (rnr) oder eine kein freies Agenten-Kommunikationsendgerät (AKE) anzeigende Kenninformation (ki), und
- eine im Ziel-Kommunikationssystem (KS2) die zugeordnete Gruppe (G) des freien oder der nicht freien Agenten-Kommunikationsendgeräte (AKE) repräsentierende Servicenummer (sr(2)) umfaßt.

10. Verfahren nach Anspruch 6, **dadurch gekennzeichnet,**
**daß** die Antwort (aw) optional
- eine die Anzahl noch freier Agenten-Kommunikationsendgeräte (AKE) der jeweiligen Gruppe anzeigenden Mengeninformation (mi) und/oder
- eine Nichtbelegt-Zeitspanne (nbt) des angegebenen freien Agenten-Kommunikationsendgerätes (AKEy) und/oder
- eine die durchschnittliche Nichtbelegt-Zeitspanne (dnbt) aller in der jeweiligen Gruppe (G) konfigurierten Agenten-Kommunikationsendgeräte (AKE) umfaßt.

11. Verfahren nach einem der vorhergehenden Ansprüche, **dadurch gekennzeichnet, daß** die Reservierungs-Freigabe (rfi)
- eine das Ursprungs- und Ziel-Kommunikationssystem (KS1,2) repräsentierende Kommunikationssysteminformation (KS1,2),
- eine das reservierte Agenten-Kommunikationsendgerät (AKE) anzeigende Rufnummer (rnr), und
- eine im Ziel-Kommunikationssystem (KS2) die zugeordnete Gruppe (G) des reservierten Agenten-Kommunikationsendgerätes (AKE) repräsentierende Servicenummer (sr(2)) umfaßt.

12. Verfahren nach einem der vorhergehenden Ansprüche, **dadurch gekennzeichnet, daß** in den eine Ressourcenanfrage (ra) empfangenden Kommunikationssystemen (KS2) nach einer Ermittlung von mehreren freien Agenten-Kommunikationsendgeräten (AKE) einer Gruppe (G) dasjenige freie Agenten-Kommunikationsendgerät (AKE) ausgewählt wird, an das die größte Zeitspanne kein ankommender Anruf (ar) vermittelt wurde.

13. Verfahren nach einem der vorhergehenden Ansprüche, **dadurch gekennzeichnet, daß** im anfragenden Kommunikationssystem (KS1) nach dem Empfang mehrerer, jeweils ein freies Agenten-Kommunikationsendgerät (AKE) der jeweiligen Gruppe (G) anzeigende Antworten (aw) das freie Agenten-Kommunikationsendgerät (AKE) derjenigen Antwort (aw) ausgewählt wird,
- bei der das angegebene Kommunikationssystem (KS) gemäß einer vorgegebenen Reihenfolge bevorzugt wird, und/oder
- bei dem an das angezeigte, freie Agenten-Kommunikationsendgerät (AKE) am längsten kein ankommender Anruf (ar) mehr vermittelt wurde, und/oder
- bei der bei angegebenen Kommunikationssystem (KS) die meisten Agenten-Kommunikationsendgeräte (AKE) einer Gruppe (G) frei sind, und/oder
- bei der die durchschnittliche Nichtbelegt-Zeitspanne (dnbt) aller in der jeweiligen Gruppe (G) konfigurierten Agenten-Kommunikationsendgeräte (AKE) am längsten ist.

## Claims

1. Method for detecting free agent communication terminals (AKE) in communication networks (KN) with automatic call distribution (ACD),
- with which incoming calls (ar) addressed to a service number (sr) are each switched to a free agent communication terminal (AKE) of a communication system (KS1, 2), which is selected by automatic call distribution (ACD) from of group (G) of agent communication terminals (AKE) assigned to the service number (sr), whereby the agent communication terminals (AKE) assigned to a group (G) are distributed over a plurality of communication systems (KS1, 2) of the communication network (KN),
- with which in the event of a call (ar) coming in to a communication system (KS) with a service number (sr), for which there is no longer a free agent communication terminal (AKE) in the assigned group (G) of this communication system (KS1), resource requests (ra) are created and transmitted to those communication systems (KS2), to which agent communication terminals (AKE) of the respective group (G) are distributed,
- with which in every communication system (KS2) receiving a resource request (ra) the availability of an agent communication terminal (AKEY) assigned to the respective group (G) is detected and a response (aw) is created and transmitted to the requesting communication system (KS1),
- with which in the requesting communication system (KS1) a communication system (KS2) with a free agent communication terminal (AKEY) of the respective group (G) is detected from the transmitted response (aw) and the incoming call (ar) is forwarded using automatic call distribution (ACD) to the detected communication system (KS2) by switching to the free agent communication terminal (AKEY).

2. Method according to Claim 1, **characterized in that** the resource request (ra) and the response (aw) are transmitted via the communication network (KN).

3. Method according to Claim 1, **characterized in that** the resource request (ra) and the response (aw) are transmitted via an additional local network (LAN).

4. Method according to one of Claims 1 to 3, **characterized in that** if an agent communication terminal (AKEY) assigned to the respective group (G) is available, the detected agent communication terminal (AKEY) is reserved.

5. Method according to Claim 3, **characterized in that** after detection of a communication system (KS2) reporting a free agent communication terminal (AKEY) for those communication systems (KS) which also report a free agent communication terminal (AKEY) of the respective group (G), automatic call distribution (ACD) is used to create a reservation release (rfi) and transmit it to the respective communication systems (KS), whereupon the reservation of the agent communication terminals (AKE) there is canceled.

6. Method according to Claim 4, **characterized in that** in the communication systems (KS2) transmitting a response (aw) to the requesting communication system (KS1) the reservation of the agent communication terminal (AKE) of the respective group (G) is canceled after a predefined time period, as long as no reservation release (rfi) is received there for the respective agent communication terminal (AKE).

7. Method according to Claim 1, **characterized in that** in the requesting communication system (KS1) after receipt of responses (aw) which report no free agent communication terminal (AKE) of the respective group (G), the incoming call (ar) is switched to a further call processing device using automatic call distribution (ACD) or rejected.

8. Method according to one of the preceding Claims, **characterized in that**
the resource request (ra) comprises
- communication system information (KS1, 2) representing the source and destination communication systems (KS1, 2),
- line information (li) representing the physical communication connection (KA) transmitting the respective incoming call (ar) in the source communication system (KS1),
- a service number (sr(1)) representing the assigned group (G) of agent communication terminals (AKE) in the source communication system (KS1), and
- a service number (sr(2)) representing the assigned group (G) of agent communication terminals (AKE) in the destination communication system (KS2).

9. Method according to one of the preceding Claims, **characterized in that**
the response (aw) comprises
- communication system information (KS1, 2) representing the source and destination communication systems (KS1, 2),
- line information (li) representing the physical communication connection (KA) transmitting the respective incoming call (ar) in the source communication system (KS1),
- a call number (rnr) indicating the free agent communication terminal (AKE) or an identifier (ki) indicating no free agent communication terminal (AKE), and
- a service number (sr(2)) representing the assigned group (G) of the free or not free agent communication terminals (AKE) in the destination communication system (KS2).

10. Method according to Claim 6, **characterized in that**
the response (aw) optionally comprises
- quantity information (mi) indicating the number of agent communication terminals (AKE) of the respective group still free and/or
- the non-busy time period (nbt) of the specified free agent communication terminal (AKEy) and/or
- the average non-busy time period (dnbt) of all the agent communication terminals (AKE) configured in the respective group (G).

11. Method according to one of the preceding Claims, **characterized in that** the reservation release (rfi) comprises
- communication system information (KS1, 2) representing the source and destination communication systems (KS1, 2),
- a call number (rnr) indicating the reserved agent communication terminal (AKE), and
- a service number (sr(2)) representing the assigned group (G) of the reserved agent communication terminal (AKE) in the destination communication system (KS2).

12. Method according to one of the preceding Claims, **characterized in that** in the communication systems (KS2) receiving a resource request (ra) after detection of a plurality of free agent communication terminals (AKE) of a group (G) the free agent communication terminal (AKE) is selected, to which no incoming call (ar) has been switched for the longest time period.

13. Method according to one of the preceding Claims, **characterized in that** in the requesting communication system (KS1) after receipt of a plurality of responses (aw) each indicating a free agent communication terminal (AKE) of the respective group (G) the free agent communication terminal (AKE) is selected of the response (aw),
- in which the specified communication system (KS) is preferred according to a predefined sequence, and/or
- in which no incoming call (ar) has been switched to the indicated free agent communication terminal (AKE) for the longest period, and/or
- in which most agent communication terminals (AKE) of a group (G) are free in the case of a specified communication system (KS) and/or
- in which the average non-busy period (dnbt) of all the agent communication terminals (AKE) configured in the respective group (G) is longest.

## Revendications

1. Procédé pour déterminer des terminaux de communication agents (AKE) libres dans des réseaux de communication (KN) ayant une distribution d'appels automatique (ACD),
- dans lequel des appels entrants (ar), adressés à un numéro de service (sr) sont respectivement commutés vers un terminal de communication agent (AKE) libre d'un système de communication (KS1, 2), qui est sélectionné par la distribution d'appels automatique (ACD) dans un groupe (G) de terminaux de communication agents (AKE) attribués au numéro de service (sr), les terminaux de communication agents (AKE) attribués à un groupe (G) étant répartis sur plusieurs systèmes de communication (KS1, 2) du réseau de communication (KN),
- dans lequel, lorsqu'un appel (ar) ayant un numéro de service (sr) entrant dans un système de communication (KS), pour lequel plus aucun terminal de communication agent (AKE) n'est libre pour le groupe (G) attribué de ce système de communication (KS1), des demandes de ressources (ra) sont formées et transmises aux systèmes de communication (KS2), auxquels des terminaux de communication agents (AKE) du groupe (G) respectif sont répartis,
- dans lequel, dans chaque système de communication (KS2) recevant une demande de ressource (ra), la disponibilité d'un terminal de communication agent (AKEY) attribué au groupe respectif (G) est déterminée ainsi qu'une réponse (aw) est formée et transmise au système de communication (KS1) demandant,
- dans lequel, dans le système de communication (KS1) demandant, un système de communication (KS2) ayant un terminal de communication agent (AKEY) libre du groupe respectif (G) est déterminé à partir de la réponse (aw) transmise, et l'appel entrant (ar) est transféré au système de communication (KS2) déterminé, à l'aide de la distribution d'appels automatique (ACD), au sens d'une commutation au terminal de communication agent (AKEY) libre.

2. Procédé selon la revendication 1, **caractérisé en ce que** la demande de ressource (ra) et la réponse (aw) sont transmises par l'intermédiaire du réseau de communication (KN).

3. Procédé selon la revendication 1, **caractérisé en ce que** la demande de ressource (ra) et la réponse (aw) sont transmises par l'intermédiaire d'un réseau local (LAN) supplémentaire.

4. Procédé selon l'une quelconque des revendications 1 à 3, **caractérisé en ce que**, lors de disponibilité d'un des terminaux de communication agents (AKEY) attribués au groupe respectif (G), le terminal de communication agent (AKEY) déterminé est réservé.

5. Procédé selon la revendication 3, **caractérisé en ce qu'**après la détermination d'un système de communication (KS2) signalant un terminal de communication agent (AKEY) libre pour les systèmes de communication (KS) qui signalent également un terminal de communication agent (AKEY) libre du groupe respectif (G), une libération de réservation (rfi) est formée à l'aide de la distribution d'appels automatique (ACD) et est transmise aux systèmes de communication respectifs (KS), sur quoi la réservation des terminaux de communication agents (AKE) est annulée dans ceux-ci.

6. Procédé selon la revendication 4, **caractérisé en ce que** dans les systèmes de communication (KS2) transmettant une réponse (aw) au système de communication demandant (KS1), la réservation du terminal de communication agent (AKE) du groupe respectif (G) est annulée après un intervalle de temps prédéfini, dans la mesure où aucune libération de réservation (rfi) n'est reçue pour le terminal de communication agent (AKE) au cours de cet intervalle de temps.

7. Procédé selon la revendication 1, **caractérisé en ce que**, dans le système de communication (KS1) demandant, l'appel entrant (ar) est commuté, après une réception de réponses (aw) qui ne signalent aucun terminal de communication agent (AKE) libre du groupe respectif (G), à un dispositif de traitement d'appels à l'aide de la distribution d'appels automatique (ACD) ou est refusé.

8. Procédé selon l'une quelconque des revendications précédentes, **caractérisé**
**en ce que** la demande de ressource (ra) comprend
- une information de système de communication (KS1, 2) représentant le système de communication d'origine et celui de destination (KS1, 2),
- une information de ligne (li) représentant, dans le système de communication d'origine (KS1), le raccordement de communication physique (KA) transmettant l'appel entrant respectif (ar),
- un numéro de service (sr (1) ) représentant, dans le système de communication d'origine (KS1), le groupe attribué (G) de terminaux de communication agents (AKE), et
- un numéro de service (sr (2) ) représentant, dans le système de communication de destination (KS2), le groupe attribué (G) de terminaux de communication agents (AKE).

9. Procédé selon l'une quelconque des revendications précédentes, **caractérisé**
**en ce que** la réponse (aw) comprend
- une information de système de communication (KS1, 2) représentant le système de communication d'origine et celui de destination (KS1, 2),
- une information de ligne (li) représentant, dans le système de communication d'origine (KS1), le raccordement de communication physique (KA) transmettant l'appel entrant respectif (ar),
- un numéro d'appel (rnr) indiquant le terminal de communication agent (AKE) libre ou une information caractéristique (ki) indiquant qu'aucun terminal de communication agent (AKE) n'est libre, et
- un numéro de service (sr (2) ) représentant, dans le système de communication de destination (KS2), le groupe attribué (G) du terminal de communication agent libre ou des terminaux de communication agents (AKE) non libres.

10. Procédé selon la revendication 6, **caractérisé en ce que** la réponse (aw) comprend de manière optionnelle
- une information de quantité (mi) indiquant le nombre de terminaux de communication agents (KE) encore libres du groupe respectif et/ou
- un intervalle de temps non-occupé (nbt) du terminal de communication agent (AKEY) libre indiqué et/ou
- un intervalle de temps moyen non-occupé (dbnt) de tous les terminaux de communication agents (AKE) configurés dans le groupe respectif (G).

11. Procédé selon l'une quelconque des revendications précédentes, **caractérisé en ce que** la libération de réservation (rfi) comprend
- une information de système de communication (KS1, 2) représentant le système de communication d'origine et celui de destination (KS1, 2),
- un numéro d'appel (rnr) indiquant le terminal de communication agent (AKE) réservé, et
- un numéro de service (sr (2) ) représentant, dans le système de communication de destination (KS2), le groupe attribué (G) du terminal de communication agent (AKE) réservé.

12. Procédé selon l'une quelconque des revendications précédentes, **caractérisé en ce que** dans les systèmes de communication (KS2) recevant une demande de ressource (ra), après une détermination de plusieurs terminaux de communication opérateurs (AKE) libres d'un groupe (G), ce terminal de communication agent (AKE) est sélectionné, auquel aucun appel entrant (ar) n'a été transmis pendant l'intervalle de temps le plus long.

13. Procédé selon l'une quelconque des revendications précédentes, **caractérisé en ce que**, dans le système de communication demandant (KS1), après la réception de plusieurs réponses (aw) indiquant respectivement un terminal de communication agent (AKE) libre du groupe respectif (G), le terminal de communication agent (AKE) libre de cette réponse est sélectionné,
- pour laquelle le système de communication (KS) indiqué est préféré selon un ordre prédéfini, et/ou
- dans lequel plus aucun appel entrant (ar) n'a été commuté, pendant le plus longtemps, au terminal de communication agent (AKE) indiqué libre, et/ou
- dans laquelle, lorsque le système de communication (KS) est indiqué, la plupart des terminaux de communication agents (AKE) d'un groupe (G) sont libres, et/ou
- dans laquelle l'intervalle de temps moyen non-occupé (dnbt) de tous les terminaux de communication agents (AKE) configurés dans le groupe respectif (G) est le plus long.
